Europäisches Patentamt

European Patent Office

Office européen des brevets

(19)

(11) Publication number: **0 073 440**
A1

(12) **EUROPEAN PATENT APPLICATION**

(21) Application number: 82107675.9

(22) Date of filing: 21.08.82

(51) Int. Cl.³: **F 16 K 1/44**

(30) Priority: 02.09.81 JP 138198/81

(43) Date of publication of application: 09.03.83
Bulletin 83/10

(84) Designated Contracting States: **DE FR GB IT**

(71) Applicant: **DODWELL & COMPANY LIMITED, 61, St.
Mary Axe, London EC 3A 8AN (GB)**

(72) Inventor: **Yagi, Keisuke, Kowa Bld. No. 16 Annex 9-20,
Akasaka 1-chome, Minato-ku Tokyo (JP)**

(74) Representative: **Graf, Helmut, Dipl.-Ing. et al, Greflinger
Strasse 7 Postfach 382, D-8400 Regensburg (DE)**

(54) **Valve to prevent mixing.**

(57) A valve to prevent mixing of two kinds of liquid by doubly sealing flow channels of plants and installations dealing with food, beverages and the like, characterized in that diameter of the valve stem at an area contacting with the bottom of the valve box is nearly equal to or larger than that of the second valve body. It can prevent mixing thereof even when a flow pressure heigher than that designed is added to the channels due to mishandling of pipe-line or water hammering action.

## BACKGROUND OF THE INVENTION

This invention relates to an improved valve to prevent mixing of two kinds of liquid by doubly sealing flow channels of plants and installations dealing with food, beverages and the like, and more particularly to a valve to prevent mixing thereof completely even when a flow pressure heigher than that of designed is added to the channels due to mishandling of pipe-line or water hammering action.

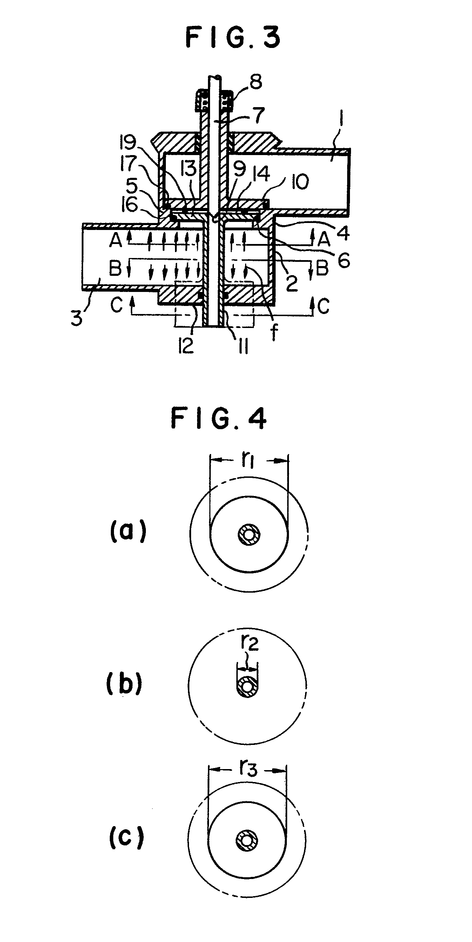

Heretofore, a conventional valve used for such plants and installations, as shown in Fig 3, comprises the first flow channel 1, the second flow channel 3 disposed under the first channel 1 and provided with a valve box 2 at an end part thereof, a connecting part 4 arranged between the first channel 1 and the valve box 2 to communicate the channels 1 and 3 each other, the first and second valve seats 5 and 6 provided apart vertically on the connecting part 4, the first valve body slidably fitted to a valve spindle 7 and capably pushed to the first valve seat 5 by means of a valve spring 8, and the second valve body 13 fixed to the head 9 of the valve spindle 7 and engaged with the second valve seat 6, a part of a valve stem 11 protruding from the bottom 12 of the valve box 2, the first and second flow channels 1 and 3 being separated independently to provide a hollow chamber 14 between two valve bodies 10 and 13 when they are closed, while the flow channels 1 and 3 being communicated freely each other through the valve box 2 and the cnnecting part 4 when they are opened. Diameter of the valve stem 11 at an area contacting with the bottom 12 of the valve box 2 (which is shown by r2 in Fig. 4(b) taken on line B-B of Fig. 3) is much smaller than that of the valve body 13 (which

0073440

- 2 -

is shown by rl in Fig. 4(a) taken on line A-A of Fig. 3).

In such a conventional valve described above, the flow pressure in the channel, shown by f in Fig. 3, increases significantly to an extent far beyond that of designed due to mishandling of pipe-line or water hammering action, thereby the second valve body 13 and then the first one 10 are pushed up successively. This causes a flow of liquid from the channel 3 to the other 1 to form an underiably mixed or contaminated liquid.


## SUMMARY OF THE INVENTION

Accordingly, it is an object of this inveniton to provide a valve to prevent mixing of two kinds of liquid completely.

Another object of this invnention is to provide a valve in which valve bodies are not pushed up by flow pressure higher than that of designed.

According to this invention, these and further objects can be accomplished by providing a valve to prevent mixing comprising the first flow channel, the second flow channel disposed under the first channel and provided with a valve box at an end part thereof, a connecting part arranged between the first channel and the valve box to communicate the channels each other, the first and second valve seats provided apart vertically on the connecting part, the first valve body slidably fitted to a valve spindle and capably pushed to the first valve seat by means of a valve spring, and the second valve body fixed to the head of the valve spindle and engaged with the second valve seat, a part of a valve stem of the second valve body protruding from the bottom of the valve box, the first and second flow channels being separated independently to provide a hollow chamber between two valve bodies when they are closed, while tow flow channels being communicated freely each other through the valve box and the connecting part when they are opened, characterized in that diameter of the valve stem at an area contacting with the bottom of the valve box is nearly equal to or larger than that of the second valve body.

BRIEF DESCRIPTION OF THE DRAWING

In the accompanying drawing:

Fig. 1 shows a sectional view of a valve embodying this invention at a closed position;

Fig. 2 shows a sectional view of a valve embodying this invention at an opened position;

Fig. 3 shows partially schematic illustration of Fig. 1;

and Fig. 4 (a), (b) and (c) show transverse sectional views taken on lines A-A, B-B and C-C of Fig. 3, respectively.

DETAILED DESCRIPTION

Referring now more particularly to the drawings in detail, reference numeral 1 indicates the first flow channel, while reference numeral 3 indicates the second flow channel disposed under the first one 1, which is provided with a valve box 2 at an end part thereof. A connecting part 4 is arranged between the first channel 1 and the valve box 2 and provided with valve seats 5 and 6 apart vertically thereon.

Reference numeral 10 indicates the first valve body which is slidably fitted to a valve spindle and can be pushed down to the first valve seat 5 by means of a valve spring 8. Reference numeral 13 indicates the second valve body which is fixed to the head 9 of the spindle 7 and engaged with the second seat 6. A part of a valve stem 11 of the valve body 13 protrudes through the bottom 12 of the valve box 2.

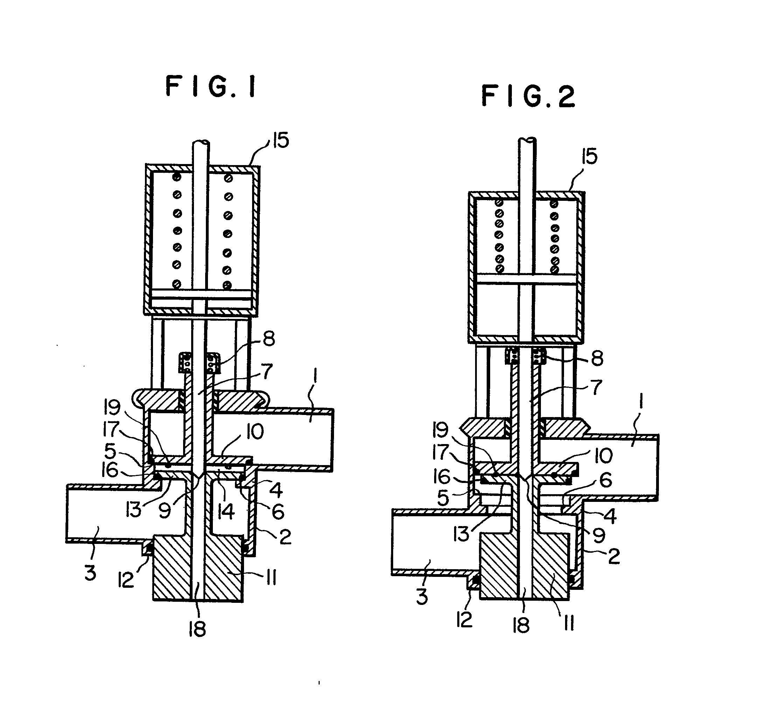

As shown in Fig. 1, the first and second flow channels 1 and 3 are separated independently to provide a hollow chamber 14 between the valve bodies 10 and 13 when these bodies are closed, while the channels 1 and 3, as shown in Fig. 2, are communicated freely each other through the valve box 2 and the conecting part 4 when two bodies are opened.

At a closed position of the valve shown in Fig. 1, the valve spindle 7 is pushed down under the action of a cylinder 15, and the second valve body 13 is pushed down to the second valve seat 6 under the pressure of the cylinder 15 itself through an O-ring 16 so as to keep the closed position. While the first valve body 10 is pushed down under the pressure of the valve spring 8 through an O-ring 17 to the first valve seat 5 so as to keep the closed pisition. And when the liquid in the first or second channel 1 or 3 leaks into the other through the valve seat 5 or 6, the leaked liquid flows into the hollow chamber 14 which is then discharged outside through a discharge channel 18.

At the opened position of the valve shown in Fig. 2, the valve spindle 7 is lifted up by means of the cylinder 15, and the first valve body 10 is held in the middle of the first flow channel 1 in such a manner that the valve bodies 10 and 13 are contacted through the O-ring 19. Thus the first and second flow channels 1 and 3 are communicated freely each other through the valve box 2 and the connecting part 4, which makes it possible to flow the liquid in the first channel 1 into the second one 3 or vice virsa.

The most characteristic feature of this invention resides in that the diameter of the valve stem 11 at the area contacting with the bottom 12 of the valve box 2 is nearly equal to or larger than that of the second valve body 13. Referring to Fig. 3 and 4, the feature of this invention will be described. The diameter of the valve stem 11 in a case of conventional valve mechanism is $r_2$ as shown in Fig. 4(b) taken on line B-B of Fig. 3. According to this invention, however, the diameter $r_3$ of the stem 11 at the area contacting with the bottom 12 of the valve box 2 is nearly equal to or larger than that of the second valve body 13 as shown in Fig. 4(c) taken on line C-C of Fig. 3. That is to say, when the numerical valve of $r_3$ approximates to or increases over that of $r_1$, a force to push up the valve body is necessarily offset each other even if flow pressure much higher than that of designed is added due to mishandling of pipe-line or water hammering action. Thus, the mixing of two kinds of liquid in separated flow channels is easily prevented without increasing the cylinder pressure. Especially, when $r_3$ is larger than $r_1$, higher pressure occured in the channel does not push up the valve bodies but, conversely, pulls down them to the valve seats.

Accordingly, the valve of this invention never causes undesirable mixing of liquid under a lower pressure of cylinder, which makes it possible to employ a smaller-sized cylinder and thus lower the valve weight as a whole.  Further,
reduction of pressure added to the valve seat through the valve
body makes  their life longer.

WHAT WE CLAIM IS:

A valve to prevent mixing comprising the first flow channel, the second flow channel disposed under the first channel and provided with a valve box at an end part thereof, a connecting part arranged between the first channel and the valve box to communicate the channels each other, the first and second valve seats provided apart vertically on the connecting part, the first valve body slidably fitted to a valve spindle and capably pushed to the first valve seat by means of a valve spring, and the second valve body fixed to the head of the valve spindle and engaged with the second valve seat, a part of a valve stem of the second valve body protruding from the bottom of the valve box, the first and second flow channels being separated independently to provide a hollow chamber between two valve bodies when they are closed, while two flow channels being communicated freely each other through the valve box and the connecting part when they are opened, characterized in that diameter of the valve stem at an area contacting with the bottom of the valve box is nearly equal to or larger than that of the second valve body.

0073440

**FIG.1**

**FIG.2**

# F I G. 3

# F I G. 4

(a)

(b)

(c)

0073440

EUROPEAN SEARCH REPORT

European Patent Office

**EUROPEAN SEARCH REPORT**

Application number

EP 82 10 7675

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 K 1/44 |
| A | DE-A-2 523 202 (TUCHENHAGEN) *Figures* | 1 | |
| | --- | | |
| A | DE-A-2 516 784 (TUCHENHAGEN) *Figures* | 1 | |
| | --- | | |
| P,X | EP-A-0 039 319 (LUNDQUIST) *Page 2, line 22 – page 3, line 24* | 1 | |
| | ----- | | |

TECHNICAL FIELDS SEARCHED (Int. Cl. 3)

F 16 K 1/00
F 16 K 25/00
F 16 K 37/00

The present search report has been drawn up for all claims

| Place of search THE HAGUE | Date of completion of the search 23-11-1982 | Examiner VERELST P.E.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82